Europäisches Patentamt

European Patent Office

Office européen des brevets

(19)

(11) **EP 1 443 734 A1**

(12) **DEMANDE DE BREVET EUROPEEN**

(43) Date de publication:
**04.08.2004 Bulletin 2004/32**

(51) Int Cl.$^7$: **H04L 29/06**, H04N 1/36

(21) Numéro de dépôt: **04290215.5**

(22) Date de dépôt: **28.01.2004**

| | |
|---|---|
| (84) Etats contractants désignés:<br>**AT BE BG CH CY CZ DE DK EE ES FI FR GB GR HU IE IT LI LU MC NL PT RO SE SI SK TR**<br>Etats d'extension désignés:<br>**AL LT LV MK** | (72) Inventeurs:<br>• **Abou-Chakra, Rabih**<br>  **95240 Cormeilles en Parisis (FR)**<br>• **Burger, Philippe**<br>  **67190 Mutzig (FR)** |
| (30) Priorité: **31.01.2003 FR 0301105** | (74) Mandataire: **Sciaux, Edmond et al**<br>**Compagnie Financière Alcatel**<br>**Département de Propriété Industrielle,**<br>**5, rue Noel Pons**<br>**92734 Nanterre Cedex (FR)** |
| (71) Demandeur: **ALCATEL**<br>**75008 Paris (FR)** | |

(54) **Dispositif de traitement de données audio et vidéo pour une communication multimédia via un réseau local établi au sein d'un réseau asynchrone**

(57)     Un dispositif (D1) est dédié au traitement de données audio et vidéo pour une communication multimédia, via un réseau asynchrone, entre des premiers terminaux LAN audio (TM1) et vidéo (PC1) et des seconds terminaux LAN audio (TM2) et vidéo (PC2). Ce dispositif comprend i) des moyens de liaison (ML1) pour établir des communications avec les premiers terminaux LAN audio et vidéo et avec d'autres moyens de liaison (ML2) implantés dans un autre dispositif (D2), ii) des premiers moyens de datation (MD1) pour adjoindre un marquage temporel d'émission et un identifiant aux données audio et vidéo issues des premiers terminaux LAN audio (TM1) et vidéo (PC1), avant leur transmission aux autres moyens de liaison (ML2), et pour adjoindre un marquage temporel de réception à des données audio et vidéo issues des autres moyens de liaison (ML2) et contenant un identifiant et un marquage temporel d'émission, et iii) des moyens de traitement (MT1) pour déterminer un écart temporel représentatif de la différence de durée de transmission entre des données audio et des données vidéo reçues et présentant un même identifiant, à partir de leurs marquages temporels d'émission et de réception, et de retarder d'une valeur représentative de cet écart temporel la transmission des données audio reçues au premier terminal LAN audio (TM1) par rapport à celle des données vidéo reçues au premier terminal LAN vidéo (PC1).

Fig.1

EP 1 443 734 A1

## Description

L'invention concerne le domaine des réseaux asynchrones à délais de transmission aléatoires, et plus particulièrement les communications multimédia liant des terminaux de communication audio, de type LAN (pour « Local Area Network »), entre eux, et des terminaux de communication vidéo, également de type LAN, entre eux, au sein de tels réseaux.

On entend ici par « terminal de communication audio » tout équipement de réseau communicant capable d'échanger des données audio, comme par exemple un téléphone, fixe ou mobile, ou un assistant numérique personnel (ou PDA pour « Personal Digital Assistant »). De même, on entend ici par « terminal de communication vidéo » tout équipement de réseau communicant capable d'échanger des données vidéo, comme par exemple un ordinateur individuel.

Dans les réseaux asynchrones à délais de transmission aléatoires, lorsque, par exemple, deux personnes, ayant établi une communication entre leurs premiers terminaux de communication LAN audio, respectivement vidéo, via un réseau local LAN et un réseau de communications, décident en cours de communication de se communiquer des paquets de données vidéo, respectivement audio, via des seconds terminaux LAN vidéo, respectivement audio, indépendants des premiers terminaux utilisés, il survient généralement une désynchronisation entre les paquets de données audio et les paquets de données vidéo provenant d'un même utilisateur. Plus précisément, les paquets audio arrivent généralement avant les paquets vidéo, ce qui constitue une gène pour l'utilisateur recevant les données.

Cette désynchronisation résulte principalement du caractère « non déterministe » de la transmission de paquets de données au sein des réseaux asynchrones à commutation de paquets, comme par exemple les réseaux à protocole IP. On entend ici par « non déterministe » le fait de présenter un caractère variable non maîtrisable dans le temps (ou aléatoire). En effet, les flux de paquets de données audio et les flux de paquets de données vidéo, du fait de leurs natures différentes, n'empruntent généralement pas les mêmes routes au sein du réseau et ne disposent généralement pas de niveaux de priorité identiques. De plus, les routes empruntées par des paquets de données de même type peuvent varier.

Mais la désynchronisation résulte également des différences de durée de codage/décodage des données vidéo et des données audio.

Pour tenter d'améliorer la situation, il a été proposé de retarder, de façon systématique et d'une valeur constante, tous les flux audio par rapport aux flux vidéo. Cependant, ce retard constant ne permet de s'affranchir que des différences de durée de transmission non aléatoires, comme celles introduites par les opérations de codage/décodage, lesquelles ne sont pas les plus pénalisantes.

Par ailleurs, le standard MPEG4 prévoit un mécanisme permettant de synchroniser des données audio et vidéo, mais, celui-ci ne concerne que des situations dans lesquelles les données audio et vidéo proviennent soit d'un même terminal de communication, soit de deux terminaux de communication indépendants mais synchronisés.

L'invention a donc pour but de remédier à l'inconvénient précité. Elle propose à cet effet un dispositif de traitement de données audio et vidéo pour une communication multimédia, via un réseau asynchrone à délais de transmission aléatoires, entre, d'une part, un premier couple comprenant un premier terminal de communication audio et un premier terminal de communication vidéo, et d'autre part, un second couple comprenant un second terminal de communication audio et un second terminal de communication vidéo, lesdits terminaux étant tous de type LAN ; au moins le premier couple comportant des terminaux indépendants et asynchrones ; **caractérisé** en ce qu'il comprend, associé à ce premier couple, des moyens de liaison pour établir :

-   une liaison vidéo entre ces moyens de liaison et le terminal vidéo du premier couple,
-   une liaison audio entre ces moyens de liaison et le terminal audio du premier couple,
-   une liaison vidéo entre ces moyens de liaison et le second couple,
-   une liaison audio entre ces moyens de liaison et le second couple.

Grâce à ce dispositif de traitement, il est possible d'associer un terminal vidéo et un terminal audio, de type LAN, indépendants et asynchrones, pour établir une communication multimédia avec un autre couple de terminaux, en réduisant la désynchronisation entre paquets vidéo et paquets audio reçues par le couple de terminaux destinataires.. En effet, le fait que les deux flux de données soient ramenés en un même endroit (le dispositif de traitement) par les liaisons établies par le dispositif de traitement, réalise une première synchronisation de ces flux, avant de les transmettre à travers des liaisons qui vont les désynchroniser. Cette première synchronisation n'empêche pas la désynchronisation qui est causée ensuite par la transmission jusqu'aux terminaux destinataires, mais elle facilite une deuxième synchronisation en permettant d'avoir une référence de synchronisation commune pour la vidéo et l'audio, alors que les deux terminaux du premier couple sont intrinsèquement asynchrones.

Selon un mode de réalisation préférentiel, lesdits moyens de liaison comportent :

- des premiers moyens de datation agencés, d'une part, pour adjoindre un marquage temporel d'émission et un identifiant à des données audio, respectivement vidéo, provenant dudit premier terminal de communication audio, respectivement vidéo, avant leur transmission à destination du second couple via ledit réseau local, et d'autre part, pour adjoindre un marquage temporel de réception à des données audio et vidéo provenant dudit second couple et contenant un identifiant et un marquage temporel d'émission, et

- des moyens de traitement propres à déterminer un écart temporel représentatif de la différence de durée de transmission entre des données audio et des données vidéo reçues et présentant un même identifiant, à partir de leurs marquages temporels d'émission et de réception respectifs, et à retarder d'une valeur représentative dudit écart temporel la transmission desdites données audio reçues audit premier terminal de communication audio par rapport à la transmission desdites données vidéo reçues audit premier terminal de communication vidéo.

Grâce à ce double marquage temporel, à l'émission et à la réception, on peut déterminer la différence de temps de transmission entre les données audio et vidéo, sur la partie du réseau non déterministe qu'elles empruntent, puis compenser cette différence en retardant la transmission des données audio au terminal de communication audio récepteur. On réalise ainsi la seconde synchronisation mentionnée ci-dessus.

Préférentiellement, les moyens de traitement sont agencés de manière à déterminer un écart temporel représentatif non seulement de la différence de durée de transmission mais également de la différence de temps de codage/décodage entre les données audio et vidéo reçues, présentant un même identifiant.

Par ailleurs, les moyens de traitement sont préférentiellement capables de déterminer l'écart temporel non seulement à partir des marquages temporels d'émission et de réception des données audio et vidéo reçues, mais également de valeurs représentatives de leurs durées de transmission respectives entre les seconds terminaux de communication audio et vidéo qui les ont émises et les autres moyens de liaison de l'autre dispositif, en particulier lorsque les liaisons associées à ces durées sont de type déterministe.

En variante ou en complément, les moyens de traitement peuvent être agencés de manière à déterminer l'écart temporel non seulement à partir des marquages temporels d'émission et de réception des données audio et vidéo reçues, mais également à partir de valeurs représentatives de leurs durées de transmission respectives entre les moyens de liaison et les premiers terminaux de communication audio et vidéo auxquels elles sont destinées, en particulier lorsque les liaisons associées à ces durées sont de type déterministe.

Préférentiellement, les moyens de traitement comprennent une mémoire tampon dans laquelle ils stockent provisoirement les données audio à retarder avant de les communiquer aux moyens de liaison en vue de leur transmission au premier terminal de communication audio.

Les moyens de datation peuvent être également agencés de manière à adjoindre aux données audio et vidéo à transmettre aux autres moyens de liaison de l'autre dispositif des données représentatives d'un niveau de priorité, le niveau de priorité associé aux données vidéo étant préférentiellement inférieur à celui associé aux données audio.

En outre, il est avantageux que les moyens de liaison assurent une fonction de type « proxy » à la fois pour les données audio et pour les données vidéo.

L'invention porte en outre sur un terminal de communication audio, un terminal de communication vidéo et un boîtier de communication dédié équipés chacun d'un dispositif de traitement du type de celui présenté ci-avant.

L'invention est particulièrement bien adaptée, bien que de façon non limitative, aux communications impliquant un réseau asynchrone à protocole IP.

D'autres caractéristiques et avantages de l'invention apparaîtront à l'examen de la description détaillée ci-après, et des dessins annexés, sur lesquels :

- la figure 1 illustre de façon schématique un exemple de réalisation d'un terminal de communication vidéo équipé d'un dispositif selon l'invention,
- la figure 2 illustre de façon schématique un exemple de réalisation d'un terminal de communication audio équipé d'un dispositif selon l'invention, et
- la figure 3 illustre de façon schématique un exemple de réalisation d'un boîtier de communication dédié équipé d'un dispositif selon l'invention.

Les dessins annexés pourront non seulement servir à compléter l'invention, mais aussi contribuer à sa définition, le cas échéant.

L'invention concerne les communications multimédia entre des terminaux de communication via un réseau asynchrone à délais de transmission aléatoires et un réseau local de type LAN (pour « Local Area Network »), et plus précisément les communications multimédia entre, d'une part, un premier terminal de communication audio et un premier terminal de communication vidéo, indépendants, non synchronisés et de type LAN, et d'autre part, un second terminal de communication audio et un second terminal de communication vidéo, indépendants, non synchronisés et de type LAN.

Dans ce qui suit, on considère à titre d'exemple que le réseau local est un réseau local virtuel (ou VLAN pour « Virtual Local Area Network ») établi au sein d'un réseau asynchrone à protocole IP. Mais, l'invention n'est ni limitée aux réseaux locaux de type virtuel, ni aux réseaux asynchrones à protocole IP. Elle concerne tous les réseaux asynchrones dits « à commutation de paquet », dans lesquels la transmission de flux de paquets de données audio ou vidéo est de type non déterministe (ou aléatoire).

Par ailleurs, dans ce qui suit, on considère à titre d'exemple que chaque terminal de communication LAN audio est un téléphone mobile équipé de manière à pouvoir échanger des données audio via le réseau local (virtuel). Mais l'invention n'est pas limitée aux téléphones mobiles. Elle concerne tout équipement communicant capable d'échanger des données audio via le réseau local (virtuel), et notamment les assistants numériques personnels (ou PDA pour « Personal Digital Assistant »).

En outre, dans ce qui suit, on considère à titre d'exemple que chaque terminal de communication LAN vidéo est un ordinateur individuel équipé de manière à pouvoir échanger des données vidéo via le réseau local (virtuel), et éventuellement couplé à une caméra vidéo. Mais l'invention n'est pas limitée aux ordinateurs individuels (fixes ou portables). Elle concerne tout équipement communicant capable d'échanger des données vidéo via le réseau local (virtuel).

En conséquence, dans ce qui suit les expressions « téléphone mobile » et « ordinateur » désignent respectivement un terminal IP de communication audio et un terminal IP de communication vidéo, et l'expression « réseau local » désigne un réseau local virtuel (VLAN) établi au sein du réseau IP entre les différents terminaux audio et vidéo.

L'invention propose un dispositif de traitement destiné à permettre à un utilisateur de recevoir, de façon synchronisée, sur son téléphone mobile et sur son ordinateur (lesquels sont indépendants et non synchronisés) des données audio et vidéo provenant du téléphone mobile et de l'ordinateur (également indépendants et non synchronisés) d'un autre utilisateur.

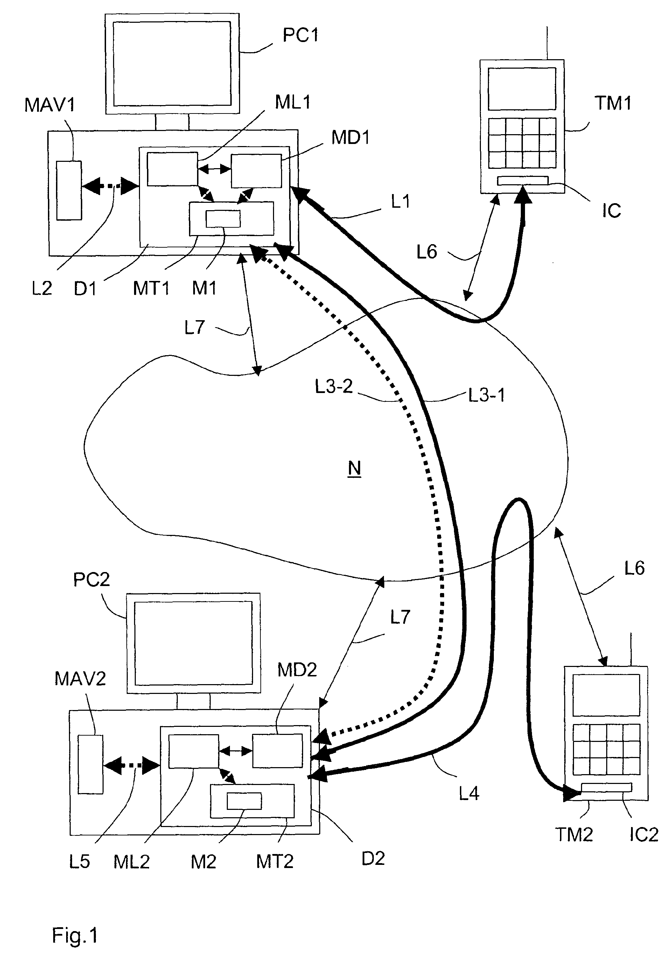

On se réfère à la **figure 1** pour décrire un exemple de réalisation de dispositifs selon l'invention, implantés dans des ordinateurs (ou PC) d'utilisateurs.

Dans cet exemple, un premier utilisateur dispose d'un premier couple comportant un premier téléphone mobile TM1 et un premier ordinateur PC1 contenant des données vidéo (ou raccordé à une caméra vidéo délivrant des données vidéo, comme par exemple une « web camera »). De même, un second utilisateur dispose d'un second couple comportant un second téléphone mobile TM1 et un second ordinateur PC2 contenant des données vidéo (ou raccordé à une caméra vidéo délivrant des données vidéo, comme par exemple une « web camera »). Par ailleurs, l'un au moins de ces deux couples comporte des terminaux indépendants et asynchrones.

Chaque ordinateur PCi (ici i = 1 et 2) est équipé d'un dispositif de traitement Di selon l'invention, comprenant un module de liaison MLi, un module de datation MDi et un module de traitement MTi, couplés les uns aux autres. Par ailleurs, chaque ordinateur PCi comporte un module applicatif vidéo MAVi couplé au dispositif Di de manière à l'alimenter en données vidéo stockées dans une mémoire ou provenant d'une caméra vidéo.

Les téléphones mobiles TMi comprennent un module applicatif audio (non représenté) qui alimente en données audio une interface de communication IP-LAN (ICi) permettant l'échange de données audio via le réseau local établi au sein du réseau IP N.

Le module de liaison MLi d'un dispositif Di (par exemple le premier) est chargé d'établir, lorsque son utilisateur souhaite échanger à la fois des données audio et des données vidéo avec l'autre utilisateur (selon des modalités qui seront détaillées plus loin), d'une première part, une liaison L1 avec le premier téléphone mobile TM1 pour la transmission des données audio, d'une deuxième part, une liaison L2 avec le module applicatif vidéo MAV1 de l'ordinateur PC1 pour la transmission des données vidéo, et d'une troisième part, deux liaisons L3-1 et L3-2 avec le module de liaison ML2 du second dispositif D2 (implanté dans l'ordinateur PC2 du second utilisateur) pour les transmissions des données audio et des données vidéo.

Préférentiellement, le module de liaison MLi assure une fonction de type « proxy » à la fois pour les données audio et pour les données vidéo.

Dans cet exemple, la liaison L1 entre le premier téléphone mobile TM1 et le premier ordinateur PC1 s'effectue via un commutateur (de type « hub » ou « switch ») du réseau local. Cette liaison IP-LAN L1 est donc de type déterministe, ce qui permet de connaître à l'avance la durée T1 nécessaire à la transmission de paquets de données audio entre le premier téléphone mobile TM1 et le premier dispositif D1. La liaison interne L2 s'effectuant au sein du premier ordinateur PC1, elle est également déterministe. La durée T2 nécessaire à la transmission de paquets de données vidéo entre le module applicatif vidéo MAV1 et le premier dispositif D1 est donc également connue à l'avance.

En revanche, les liaisons IP-LAN L3-1 et L3-2 entre les premier D1 et second D2 dispositifs s'effectuent via des routes du réseau IP N qu'il est impossible de connaître à l'avance. Ces liaisons L3-1 et L3-2 étant de type non déterministe (ou aléatoire) il n'est donc pas possible de connaître à l'avance les durées T3-1 et T3-2 nécessaires aux transmissions des paquets de données audio et des paquets de données vidéo entre les premier D1 et second D2 dispositifs.

Lorsque les modules de liaison ML1 et ML2 des premier D1 et second D2 dispositifs ont établi leurs liaisons IP-LAN L3-1 et L3-2, le module de liaison ML2 établit à son tour une liaison L4 avec le second téléphone mobile TM2 et une liaison L5 avec le module applicatif vidéo MAV2 du second ordinateur PC2.

Dans cet exemple, la liaison L4 entre le second téléphone mobile TM2 et le second ordinateur PC2 s'effectue également via un commutateur (de type « hub » ou « switch ») du réseau local. Cette liaison IP-LAN L4 est donc également de type déterministe, ce qui permet de connaître à l'avance la durée T4 nécessaire à la transmission de paquets de données audio entre le second téléphone mobile TM2 et le second dispositif D2. La liaison interne L5 s'effectuant au sein du second ordinateur PC2, elle est également déterministe. La durée T5 nécessaire à la transmission de paquets de données vidéo entre le module applicatif vidéo MAV1 et le second dispositif D2 est donc également connue à l'avance.

Sur les figures, les lignes épaisses et continues à double flèche matérialisent les chemins empruntés par les flux de paquets de données audio, tandis que les lignes épaisses en pointillés à double flèche matérialisent les chemins empruntés par les flux de paquets de données vidéo.

Le module de datation MDi de chaque dispositif Di est chargé de deux tâches. Une première tâche consiste, chaque fois que des paquets de données audio et des paquets de données vidéo doivent être transmis d'un dispositif émetteur (par exemple le premier D1) vers un dispositif récepteur (par exemple le second D2), via les liaisons IP-LAN L3-1 et L3-2, à adjoindre à chaque paquet (ou flux de paquets) un marquage temporel d'émission et un identifiant de flux permettant d'établir une correspondance entre les données audio et vidéo. Une seconde tâche consiste, chaque fois que des paquets de données audio et des paquets de données vidéo ont été reçus d'un dispositif émetteur (par exemple le second D2), via les liaisons IP-LAN L3-1 et L3-2, à adjoindre à chaque paquet (ou flux de paquets) reçu un marquage temporel de réception.

On entend ici par marquage temporel une information représentative d'un instant (d'émission ou de réception) défini par une horloge du dispositif Di.

Il est par ailleurs préférable que le module de datation MDi adjoigne à chaque paquet de données audio ou vidéo des données représentatives de son niveau de priorité compte tenu de sa nature (audio ou vidéo). Plus préférentiellement encore, le niveau de priorité associé aux paquets de données vidéo est inférieur à celui associé aux paquets de données audio. Ce marquage de niveau de priorité est préférentiellement effectué en même temps que le marquage temporel. Il permet d'assurer une cohérence entre les flux audio et les flux vidéo issus des deux sources distinctes, afin de garantir leur acheminement à travers le réseau local LAN, dans des conditions optimales et des temps de transit similaires.

En outre, on adjoint un identifiant VLAN à chaque paquet.

Les données de niveau de priorité et l'identifiant VLAN adjoints à chaque paquet de données audio ou vidéo se présentent ici sous la forme de « tags » de type IEEE 802.1 p/Q, du fait que les communications s'effectuent au sein d'un réseau local virtuel (VLAN) défini dans un réseau IP.

Les paquets de données (audio ou vidéo) reçus par un dispositif récepteur (par exemple le premier D1) présentent donc en sortie du module de datation MD1 un marquage temporel d'émission, un marquage temporel de réception, un identifiant de flux, un identifiant VLAN, et éventuellement un niveau de priorité. Ces paquets marqués sont ensuite transmis au module de traitement MTi du dispositif récepteur Di.

Le module de traitement MTi est chargé de déterminer pour chaque paquet marqué un écart temporel ET représentatif de la différence de durée de transmission entre des données audio et des données vidéo ayant été émises sensiblement simultanément par le module de liaison MLj du dispositif Dj émetteur et présentant un même identifiant de flux. Cet écart temporel ET est déterminé au moins à partir des marquages temporels d'émission et de réception des paquets audio et vidéo reçus. Par ailleurs, il est au moins représentatif de la différence de durée de transmission (T3-2 - T3-1 ) due aux liaisons IP-LAN L3-2 et L3-1 empruntées. Mais, il est préférentiellement également représentatif de la différence entre le temps de codage/décodage vidéo TCDV et le temps de codage/décodage audio TCDA, et/ou de la différence de temps de transmission (T2 — T1) sur les liaisons L2 et L1, et/ou de la différence de temps de transmission (T5 — T4) sur les liaisons L5 et L4.

Si possible, l'écart temporel déterminé est représentatif de tous les paramètres précités. Dans ce cas, on a la relation suivante :

$$ET = T3\text{-}2 - T3\text{-}1 + TCDV — TCDA + T2 — T1 + T5 — T4$$

Cette relation peut être simplifiée lorsque l'on considère que les durées de transmission T2 et T5 sont négligeables du fait qu'ici les dispositif Di et module applicatif vidéo MAVi sont implantés dans un même ordinateur PCi. Dans ce cas, elle se réécrit :

$$ET = \Delta T3 + TCDV - (TCDA + T1 + T4)$$

où, $\Delta T3 = T3\text{-}2 — T3\text{-}1$.

Les temps de codage/décodage audio (TCDA) et vidéo (TCDV) étant constants et connus, tout comme T1 et T4, le module de traitement MTi n'a donc qu'à déterminer $\Delta T3$ pour connaître l'écart temporel ET. Pour ce faire, il lui suffit de déterminer pour chaque paquet audio reçu un paquet vidéo reçu présentant un marqueur temporel d'émission sensiblement identique (ou en d'autres termes un instant d'émission sensiblement identique) et un même identifiant de flux. Il détermine alors la durée T3-1 égale à la différence temporelle entre les marquages temporels d'émission et de réception du paquet audio, et la durée T3-2 égale à la différence temporelle entre les marquages temporels d'émission et de réception du paquet vidéo. Le module de traitement MTi n'a plus alors qu'à effectuer la soustraction T3-2 — T3-1 pour disposer de $\Delta T3$.

La transmission d'un paquet audio étant habituellement plus rapide que celle d'un paquet vidéo, il n'est pas nécessaire de déterminer l'écart temporel ET pour le paquet vidéo, de plus il est égal au signe près à celui du paquet audio associé.

Une fois en possession de l'écart temporel ET associé à un paquet audio, le module de traitement MTi détermine un retard, représentatif de cet écart temporel, à lui appliquer avant de le transmettre au téléphone mobile TMi qui en est le destinataire. Les paquets vidéo sont transmis immédiatement, c'est-à-dire sans retard, au module de liaison MLi afin qu'il les communique via la liaison L2 (ou L5) au module applicatif vidéo destinataire MAVi en vue de leur affichage.

Préférentiellement, les paquets audio retardés sont stockés dans une mémoire tampon Mi pendant une durée égale au retard calculé, puis ils sont transmis au module de liaison MLi pour qu'il les communique via la liaison L1 (ou L4) au téléphone mobile TMi afin d'être diffusés sur son haut parleur.

L'utilisation d'un dispositif selon l'invention peut s'effectuer d'au moins deux façons.

Une première façon concerne la situation dans laquelle les deux utilisateurs ont établi une liaison audio IP-LAN L6 entre leurs téléphones mobiles TM1 et TM2, via leurs interfaces de communication IP-LAN IC1 et IC2 et le réseau local instauré dans le réseau IP N. Chaque téléphone mobile TMi connaît alors l'adresse IP de l'autre téléphone mobile TMj.

A un instant donné, les utilisateurs décident de se communiquer des données vidéo via leurs ordinateurs PC1 et PC2, en même temps que des données audio.

Les téléphones mobiles TM1 et TM2 s'échangent alors les adresses IP des ordinateurs PC1 et PC2 auxquels ils vont être respectivement associés. Ces adresses IP leur ont été fournies par leurs utilisateurs respectifs ou par un « call server », ou ont été extraites d'une mémoire de chaque téléphone mobile TMi. Chaque téléphone mobile TMi établit ensuite une liaison IP-LAN avec l'ordinateur PCi associé, afin de lui signaler qu'il souhaite établir une communication multimédia (voix/image) avec un autre téléphone mobile TMj et un autre ordinateur PCj, dont il fournit les adresses IP reçues. Chaque ordinateur PCi active alors les ressources nécessaires à cette communication. Le dispositif Di étant averti par l'ordinateur PCi, dans lequel il est ici implanté, son module de liaison MLi établit alors les liaisons IP-LAN L1 (ou L4) et interne L2 (ou L5) avec le téléphone mobile TMi et le module applicatif vidéo MAVi, ainsi que les liaisons IP-LAN audio L3-1 et vidéo L3-2 avec le module de liaison MLj de l'autre dispositif Dj.

Une fois ces liaisons établies, le téléphone mobile TMi (par exemple TM1) et le module applicatif vidéo MAVi (par exemple MAV1) peuvent alors simultanément communiquer leurs paquets de données audio et vidéo au module de liaison MLi (par exemple ML1 ), qui les transmet au module de datation MDi (par exemple MD1) auquel il est couplé. Au fur et à mesure de leur arrivée, les paquets audio et vidéo reçoivent du module de datation MD1 leur marquage temporel d'émission, leur identifiant de flux et leur identifiant VLAN (et éventuellement les données de niveau de priorité). Puis, les paquets marqués sont de nouveau transmis au module de liaison ML1 afin qu'il les transmette au module de liaison ML2 du dispositif récepteur D2 sur les liaisons IP-LAN audio L3-1 et vidéo L3-2 selon leur nature (audio ou vidéo).

A réception de ces paquets, le module de liaison ML2 les transmet au module de datation MD2 auquel il est couplé. Au fur et à mesure de leur arrivée, les paquets audio et vidéo reçoivent du module de datation MD2 leur marquage temporel de réception. Puis, les paquets marqués sont transmis au module de traitement MT2 qui détermine l'écart temporel ET associé et le retard (ou délai) correspondant. Les paquets audio sont ensuite stockés dans la mémoire tampon M2 du module de traitement MT2, tandis que les paquets vidéo sont immédiatement transmis au module de liaison ML2 afin qu'il les transmette au module applicatif vidéo MAV2 du second ordinateur PC2, via la liaison interne L5. Une fois que le délai (ou retard) associé à un paquet audio est écoulé, le module de traitement MT2 l'extrait de la mémoire tampon M2 puis le transmet au module de liaison ML2 afin qu'il le transmette au second téléphone mobile TM2, via la liaison IP-LAN L4.

Un mécanisme de traitement identique est mis en oeuvre au niveau du premier dispositif D1 pour les paquets audio et vidéo issus du second dispositif D2 et destinés au premier téléphone mobile TM1 et au module applicatif vidéo MAV1 du premier ordinateur PC1.

Une seconde façon concerne la situation dans laquelle les deux utilisateurs ont établi une liaison vidéo IP-LAN L7 entre leurs ordinateurs PC1 et PC2, via leurs interfaces de communication IP-LAN (non représentées) et le réseau local instauré dans le réseau IP N. Chaque ordinateur PCi connaît alors l'adresse IP de l'autre ordinateur PCj.

A un instant donné, les utilisateurs décident de se communiquer des données audio via leurs téléphones mobiles TM1 et TM2, en même temps que des données vidéo.

Les ordinateurs PC1 et PC2 s'échangent alors les adresses IP des téléphones mobiles TM1 et TM2 auxquels ils vont être respectivement associés. Ces adresses IP leur ont été fournies par leurs utilisateurs respectifs ou par un « call server » ou ont été extraites d'une mémoire de chaque ordinateur PCi. Chaque ordinateur PCi établit ensuite une liaison IP-LAN avec le téléphone mobile TMi associé afin de lui signaler qu'il souhaite établir une communication multimédia (voix/image) avec un autre téléphone mobile TMj et un autre ordinateur PCj, dont il fournit les adresses IP reçues. La suite est alors identique à ce qui a été décrit ci-dessus pour la première façon.

On a décrit ci-dessus, en référence à la figure 1, un exemple de réalisation dans lequel la liaison entre le téléphone mobile TMi et l'ordinateur PCi est de type IP-LAN. Mais, on peut envisager une variante dans laquelle cette liaison est de type ethernet. Dans ce cas, le téléphone mobile TMi et l'ordinateur PCi comportent des interfaces de communication de type IP-LAN et de type ethernet.

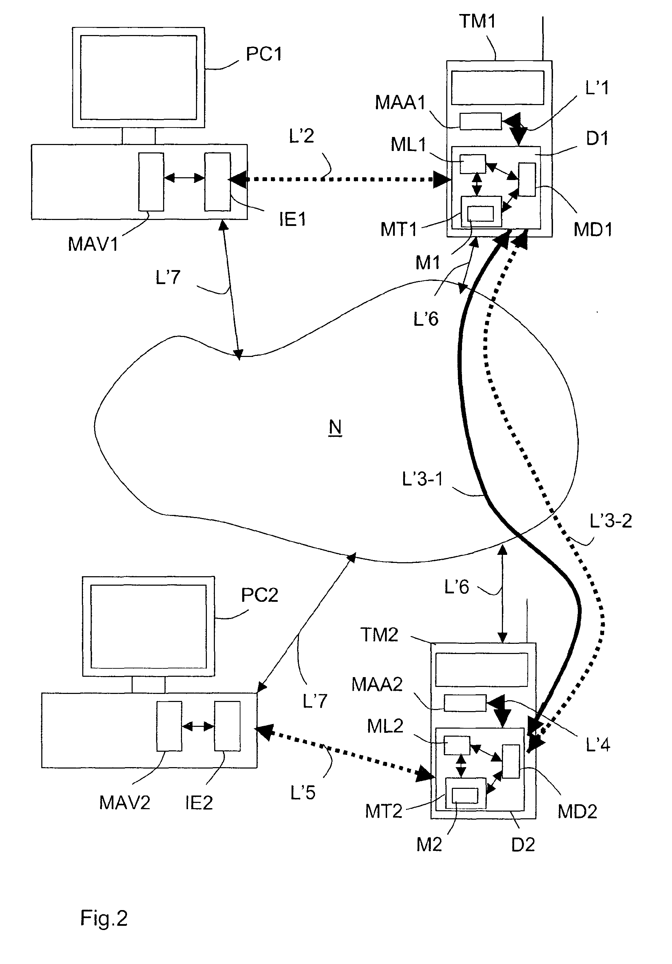

On se réfère maintenant à la **figure 2** pour décrire un exemple de réalisation de dispositifs selon l'invention, implantés dans des téléphones mobiles TMi d'utilisateurs.

Chaque téléphone mobile TMi est équipé d'un dispositif de traitement Di selon l'invention, sensiblement identique à celui décrit précédemment en référence à la figure 1, et couplé à un module applicatif audio MAAi et à une interface de type ethernet (non représentée).

Par ailleurs, chaque ordinateur PCi comprend un module applicatif vidéo MAVi couplé à une interface ethernet IEi lui permettant d'échanger directement des données vidéo avec le téléphone mobile TMi sans passer par le réseau IP N.

Le module de liaison MLi d'un dispositif Di (par exemple le premier) est ici chargé d'établir, lorsque son utilisateur souhaite échanger à la fois des données audio et des données vidéo avec l'autre utilisateur (selon des modalités qui seront détaillées plus loin), d'une première part, une liaison interne L'1 (ou L'4) avec le module applicatif audio MAAi, d'une deuxième part, une liaison ethernet L'2 (ou L'5) avec le module applicatif vidéo MAVi de l'ordinateur PCi pour la transmission des données vidéo via les interfaces ethernet, et d'une troisième part, deux liaisons IP-LAN L'3-1 et L'3-2 avec le module de liaison MLj de l'autre dispositif Dj (implanté dans l'ordinateur PCj) pour les transmissions des données audio et des données vidéo via des interfaces IP-LAN (non représentées).

La liaison ethernet L'2 (ou L'5) s'effectue directement de l'ordinateur PC1 (ou PC2) vers le téléphone mobile TM1 (ou TM2) via leurs interfaces ethernet, si bien qu'elle est de type déterministe. La liaison interne L'1 (ou L'4) s'effectuant au sein du téléphone mobile TM1 (ou TM2), elle est également de type déterministe. En revanche, les liaisons IP-LAN L'3-1 et L'3-2 entre les premier D1 et second D2 dispositifs s'effectuant via des routes du réseau IP N qu'il est impossible de connaître à l'avance, elles sont de type non déterministe (ou aléatoire).

Le calcul des écarts temporels ET par un module de traitement MTi est identique à celui présenté ci-avant en référence à la figure 1. Seule la relation simplifiée de cet écart temporel ET est différente puisque, ici, ce sont les durées de transmission T'1 et T'4 qui sont négligeables du fait que les dispositif Di et module applicatif audio MAAi sont implantés dans un même téléphone mobile TMi. Dans ce cas, elle se réécrit :

$$ET = \Delta T'3 + TCDV - (TCDA + T'2 + T'5)$$

où, $\Delta T'3 = T'3\text{-}2 — T'3\text{-}1$.

Dans cet exemple, l'utilisation des dispositifs Di peut de nouveau s'effectuer d'au moins deux façons.

Une première façon concerne la situation dans laquelle les deux utilisateurs ont établi une liaison audio IP-LAN L'6 entre leurs téléphones mobiles TM1 et TM2, via leurs interfaces de communication IP-LAN et le réseau local instauré dans le réseau IP N. Chaque téléphone mobile TMi connaît alors l'adresse IP de l'autre téléphone mobile TMj.

A un instant donné, les utilisateurs décident de se communiquer des données vidéo via leurs ordinateurs PC1 et PC2, en même temps que des données audio.

Les téléphones mobiles TM1 et TM2 s'échangent alors les adresses IP des ordinateurs PC1 et PC2 auxquels ils vont être respectivement associés, via les liaisons IP-LAN L'6. Ces adresses IP leur ont été fournies par leurs utilisateurs respectifs ou par un « call server », ou ont été extraites d'une mémoire de chaque téléphone mobile TMi. Chaque téléphone mobile TMi établit ensuite une liaison ethernet avec l'ordinateur PCi associé, afin de lui signaler qu'il souhaite établir une communication multimédia (voix/image) avec un autre ordinateur PCj, dont il fournit l'adresse IP reçue, via le dispositif Di qu'il héberge. Chaque ordinateur PCi active alors les ressources nécessaires à cette communication. Le dispositif Di étant averti par le téléphone mobile TMi, dans lequel il est ici implanté, son module de liaison MLi établit alors la liaison interne L'1 (ou L'4) avec le module applicatif audio MAAi, la liaison ethernet L'2 (ou L'5) avec l'ordinateur PCi, ainsi que les liaisons IP-LAN audio L'3-1 et vidéo L'3-2 avec le module de liaison MLj de l'autre dispositif Dj.

Une fois ces liaisons établies, le module applicatif audio MAAi du téléphone mobile TMi (par exemple TM1) et le module applicatif vidéo MAVi de l'ordinateur PCi (par exemple PC1) peuvent alors simultanément communiquer leurs paquets de données audio et vidéo, via les liaisons interne L'1 et ethernet L'2, au module de liaison MLi (par exemple ML1), qui les transmet au module de datation MDi (par exemple MD1) auquel il est couplé. Au fur et à mesure de leur arrivée, les paquets audio et vidéo reçoivent du module de datation MD1 leur marquage temporel d'émission, leur identifiant de flux et leur identifiant VLAN (et éventuellement les données de niveau de priorité). Puis, les paquets marqués sont de nouveau transmis au module de liaison ML1 afin qu'il les transmette au module de liaison ML2 du dispositif récepteur D2 sur les liaisons IP-LAN audio L'3-1 et vidéo L'3-2 selon leur nature (audio ou vidéo).

A réception de ces paquets, le module de liaison ML2 les transmet au module de datation MD2 auquel il est couplé. Au fur et à mesure de leur arrivée, les paquets audio et vidéo reçoivent du module de datation MD2 leur marquage temporel de réception. Puis, les paquets marqués sont transmis au module de traitement MT2 qui détermine l'écart temporel ET associé et le retard (ou délai) correspondant. Les paquets audio sont ensuite stockés dans la mémoire tampon M2 du module de traitement MT2, tandis que les paquets vidéo sont immédiatement transmis au module de liaison ML2 afin qu'il les transmette, via la liaison ethernet L'5, au module applicatif vidéo MAV2 du second ordinateur PC2. Une fois que le délai (ou retard) associé à un paquet audio est écoulé, le module de traitement MT2 l'extrait de la mémoire tampon M2 puis le transmet au module de liaison ML2 afin qu'il le transmette au module applicatif audio MAA2 du second téléphone mobile TM2, via la liaison interne L'4.

Un mécanisme de traitement identique est mis en oeuvre au niveau du premier dispositif D1 pour les paquets audio et vidéo issus du second dispositif D2 et destinés au premier téléphone mobile TM1 et au module applicatif vidéo MAV1 du premier ordinateur PC1.

Une seconde façon concerne la situation dans laquelle les deux utilisateurs ont établi une liaison vidéo IP-LAN L'7 entre leurs ordinateurs PC1 et PC2, via leurs interfaces de communication IP-LAN IC1 et IC2 et le réseau local instauré dans le réseau IP N. Chaque ordinateur PCi connaît alors l'adresse IP de l'autre ordinateur PCj.

A un instant donné, les utilisateurs décident de se communiquer des données audio via leurs téléphones mobiles TM1 et TM2, en même temps que des données vidéo.

Les ordinateurs PC1 et PC2 s'échangent alors les adresses IP des téléphones mobiles TM1 et TM2 auxquels ils vont être respectivement associés. Ces adresses IP leur ont été fournies par leurs utilisateurs respectifs ou par un « call server », ou ont été extraites d'une mémoire de chaque ordinateur PCi. Chaque ordinateur PCi établit ensuite une liaison IP-LAN avec le téléphone mobile TMi associé, afin de signaler à son dispositif Di qu'il souhaite établir une communication multimédia (voix/image) avec un autre téléphone mobile TMj et un autre ordinateur PCj, dont il fournit les adresses IP reçues. La suite est alors identique à ce qui a été décrit ci-dessus pour la première façon.

On a décrit ci-dessus, en référence à la figure 2, un exemple de réalisation dans lequel la liaison entre le téléphone mobile TMi et l'ordinateur PCi est de type ethernet. Mais, on peut envisager une variante dans laquelle cette liaison est de type IP-LAN. Dans ce cas, le téléphone mobile TMi et l'ordinateur ne comportent que des interfaces de communication IP-LAN.

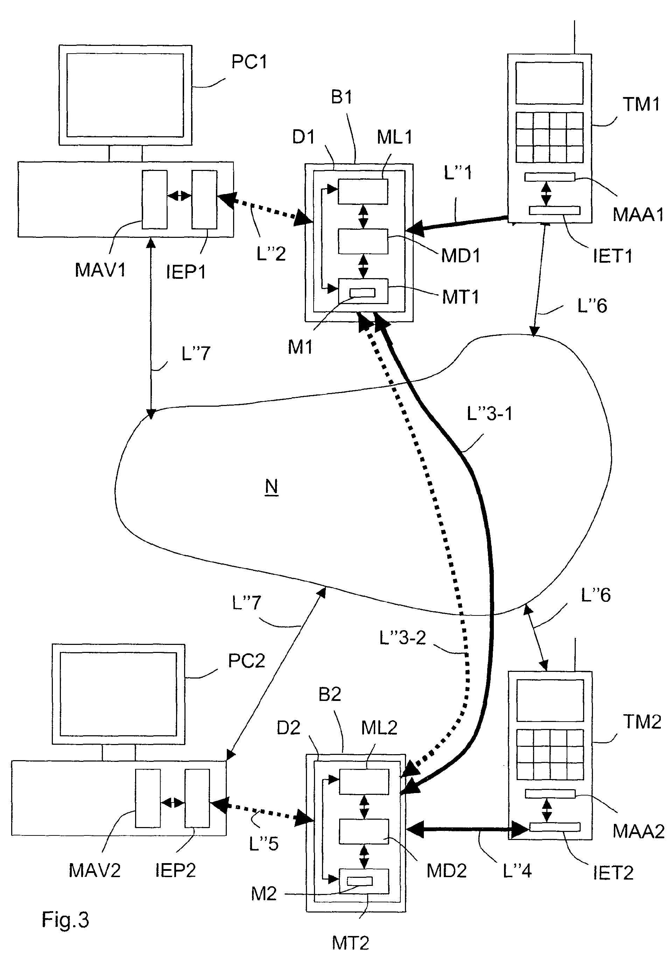

On se réfère maintenant à la **figure 3** pour décrire un exemple de réalisation de dispositifs selon l'invention, implantés dans des boîtiers de communications dédiés Bi.

Chaque téléphone mobile TMi est ici équipé d'un module applicatif audio MAAi couplé à une interface IP-LAN (non représentée) et à une interface ethernet IETi. Par ailleurs, chaque ordinateur PCi comprend un module applicatif vidéo MAVi couplé à une interface de communication IP-LAN (non représentée) et à une interface ethernet IEPi.

Chaque boîtier de communication Bi comprend un dispositif de traitement Di selon l'invention, sensiblement identique à celui décrit précédemment en référence aux figures 1 et 2, et couplé à des interfaces de communication. Dans l'exemple illustré, le boîtier Bi est plus précisément équipé d'interfaces ethernet (non représentées), reliées aux interfaces ethernet IETi et IEPi du téléphone mobile TMi et de l'ordinateur PCi, et d'interfaces IP-LAN (non représentées) couplées au réseau IP N.

Mais, le « boîtier » dédié Bi peut également se présenter sous la forme d'une carte de communication implantée dans un serveur du réseau IP N et comportant uniquement un dispositif Di couplé à une interface IP-LAN.

Le module de liaison MLi d'un dispositif Di (par exemple le premier) est ici chargé d'établir, lorsque son utilisateur souhaite échanger à la fois des données audio et des données vidéo avec l'autre utilisateur (selon des modalités qui seront détaillées plus loin), d'une première part, une liaison ethernet L"1 (ou L"4) avec le module applicatif audio MAAi du téléphone mobile TMi pour la transmission des données audio via les interfaces ethernet, d'une deuxième part, une liaison ethernet L"2 (ou L"5) avec le module applicatif vidéo MAVi de l'ordinateur PCi pour la transmission des données vidéo via les interfaces ethernet, et d'une troisième part, deux liaisons IP-LAN L"3-1 et L"3-2 avec le module de liaison MLj de l'autre dispositif Dj (implanté dans l'ordinateur PCj) pour les transmissions des données audio et des données vidéo via l'interface IP-LAN (non représentée).

La liaison ethernet L"1 s'effectue directement du téléphone mobile TMi vers le boîtier Bi via leurs interfaces ethernet, si bien qu'elle est de type déterministe. De même, la liaison ethernet L"2 s'effectue directement de l'ordinateur PCi vers le boîtier Bi via leurs interfaces ethernet, si bien qu'elle est de type déterministe. En revanche, les liaisons IP-LAN L"3-1 et L"3-2 entre les premier D1 et second D2 dispositifs s'effectuant via des routes du réseau IP N qu'il est impossible de connaître à l'avance, elles sont de type non déterministe (ou aléatoire).

Le calcul des écarts temporels ET par un module de traitement MTi est identique à celui présenté ci-avant en référence à la figure 1. Lorsque les durées de transmission T"1 et T"2 (ou T"4 et T"5) sur les liaisons ethernet L"1 et L"2 (ou L"4 et L"5) sont sensiblement identiques, on peut réécrire la relation simplifiée de l'écart temporel ET comme suit :

$$ET = \Delta T''3 + TCDV - TCDA$$

où, $\Delta T''3 = T''3\text{-}2 - T''3\text{-}1$.

Dans cet exemple, l'utilisation des dispositifs Di peut de nouveau s'effectuer d'au moins deux façons.

Une première façon concerne la situation dans laquelle les deux utilisateurs ont établi une liaison audio IP-LAN L"6 entre leurs téléphones mobiles TM1 et TM2, via leurs interfaces de communication IP-LAN et le réseau local instauré dans le réseau IP N. Chaque téléphone mobile TMi connaît alors l'adresse IP de l'autre téléphone mobile TMj.

A un instant donné, les utilisateurs décident de se communiquer des données vidéo via leurs ordinateurs PC1 et PC2, en même temps que des données audio.

Les téléphones mobiles TM1 et TM2 s'échangent alors les adresses IP des ordinateurs PC1 et PC2 auxquels ils vont être respectivement associés, via les liaisons IP-LAN L"6. Ces adresses IP leur ont été fournies par leurs utilisateurs respectifs ou par un « call server », ou ont été extraites d'une mémoire de chaque téléphone mobile TMi. Chaque téléphone mobile TMi établit ensuite une liaison ethernet avec le boîtier Bi afin de lui signaler qu'il souhaite établir une communication multimédia (voix/image) avec un autre ordinateur PCj et le téléphone mobile TMj, dont il fournit les adresses IP. Le boîtier Bi établit ensuite une liaison ethernet avec l'ordinateur PCi afin de lui signaler que le téléphone mobile TMi souhaite établir une communication multimédia (voix/image) avec l'ordinateur PCj et le téléphone mobile TMj. L'ordinateur PCi active alors les ressources nécessaires à cette communication. Le dispositif Di du boîtier Bi établit alors, grâce à son module de liaison MLi, la liaison ethernet L"1 (ou L"4) avec le module applicatif audio MAAi du téléphone mobile TMi, la liaison ethernet L"2 (ou L"5) avec le module applicatif vidéo MAVi de l'ordinateur PCi, ainsi que les liaisons IP-LAN audio L"3-1 et vidéo L"3-2 avec le module de liaison MLj de l'autre dispositif Dj.

Une fois ces liaisons établies, le module applicatif audio MAAi du téléphone mobile TMi (par exemple TM1) et le module applicatif vidéo MAVi de l'ordinateur PCi (par exemple PC1) peuvent alors simultanément communiquer leurs paquets de données audio et vidéo, via les liaisons ethernet L"1 et L"2, au module de liaison MLi (par exemple ML1), qui les transmet au module de datation MDi (par exemple MD1) auquel il est couplé. Au fur et à mesure de leur arrivée, les paquets audio et vidéo reçoivent du module de datation MD1 leur marquage temporel d'émission, leur identifiant de flux et leur identifiant VLAN (et éventuellement les données de niveau de priorité). Puis, les paquets marqués sont de nouveau transmis au module de liaison ML1 afin qu'il les transmette au module de liaison ML2 du dispositif récepteur D2 sur les liaisons IP-LAN audio L"3-1 et vidéo L"3-2 selon leur nature (audio ou vidéo).

A réception de ces paquets, le module de liaison ML2 les transmet au module de datation MD2 auquel il est couplé. Au fur et à mesure de leur arrivée, les paquets audio et vidéo reçoivent du module de datation MD2 leur marquage temporel de réception. Puis, les paquets marqués sont transmis au module de traitement MT2 qui détermine l'écart temporel ET associé et le retard (ou délai) correspondant. Les paquets audio sont ensuite stockés dans la mémoire tampon M2 du module de traitement MT2, tandis que les paquets vidéo sont immédiatement transmis au module de liaison ML2 afin qu'il les transmette, via la liaison ethernet L"5, au module applicatif vidéo MAV2 du second ordinateur PC2. Une fois que le délai (ou retard) associé à un paquet audio est écoulé, le module de traitement MT2 l'extrait de la mémoire tampon M2 puis le transmet au module de liaison ML2 afin qu'il le transmette au module applicatif audio MAA2 du second téléphone mobile TM2, via la liaison ethernet L"4.

Un mécanisme de traitement identique est mis en oeuvre au niveau du premier dispositif D1 pour les paquets audio et vidéo issus du second dispositif D2 et destinés au premier téléphone mobile TM1 et au module applicatif vidéo MAV1 du premier ordinateur PC1.

Une seconde façon concerne la situation dans laquelle les deux utilisateurs ont établi une liaison vidéo IP-LAN L"7 entre leurs ordinateurs PC1 et PC2, via leurs interfaces de communication IP-LAN IC1 et IC2 et le réseau local instauré dans le réseau IP N. Chaque ordinateur PCi connaît alors l'adresse IP de l'autre ordinateur PCj.

A un instant donné, les utilisateurs décident de se communiquer des données audio via leurs téléphones mobiles TM1 et TM2, en même temps que des données vidéo.

Les ordinateurs PC1 et PC2 s'échangent alors les adresses IP des téléphones mobiles TM1 et TM2 auxquels ils vont être respectivement associés. Ces adresses IP leur ont été fournies par leurs utilisateurs respectifs ou par un « call server », ou ont été extraites d'une mémoire de chaque ordinateur PCi. Chaque ordinateur PCi établit ensuite une liaison IP-LAN avec le téléphone mobile TMi associé afin de signaler à son dispositif Di qu'il souhaite établir une communication multimédia (voix/image) avec un autre téléphone mobile TMj et un autre ordinateur PCj, dont il fournit les adresses IP reçues. La suite est alors identique à ce qui a été décrit ci-dessus pour la première façon.

On a décrit ci-dessus, en référence à la figure 3, un exemple de réalisation dans lequel les liaisons entre le boîtier Bi et le téléphone mobile TMi, d'une part, et entre le boîtier Bi et l'ordinateur PCi, d'autre part, sont de type ethernet. Mais, on peut envisager une première variante dans laquelle ces deux liaisons sont de type IP-LAN. Dans ce cas, le boîtier Bi, le téléphone mobile TMi et l'ordinateur PCi ne comportent que des interfaces de communication IP-LAN. On peut également envisager une seconde variante dans laquelle l'une des deux liaisons est de type ethernet tandis que l'autre liaison est de type IP-LAN.

Le dispositif de traitement Di selon l'invention peut être réalisé sous la forme de circuits électroniques, de modules logiciels (ou informatiques), ou d'une combinaison de circuits et de logiciels. Il est cependant préférable de le réaliser à l'aide de modules logiciels du fait qu'il est destiné à effectuer des traitements sur des protocoles applicatifs dont le niveau est supérieur au niveau quatre du modèle en couches OSI.

L'invention ne se limite pas aux modes de réalisation de dispositif de traitement, de terminal de communication audio, de terminal de communication vidéo et de boîtier de communication dédié décrits ci-avant, seulement à titre d'exemple, mais elle englobe toutes les variantes que pourra envisager l'homme de l'art dans le cadre des revendications ci-après.

Ainsi, on a décrit des exemples de réalisation adaptés aux communications via un réseau asynchrone à protocole IP. Mais, l'invention n'est pas limitée à ces seuls réseaux asynchrones. Elle concerne d'une manière générale tous les réseaux dits « à commutation de paquet », dans lesquels la transmission de flux de paquets de données audio ou vidéo est de type non déterministe.

## Revendications

1.   Dispositif de traitement de données audio et vidéo (D1) pour une communication multimédia (L3-1, L3-2), via un réseau asynchrone (N) à délais de transmission aléatoires, entre, d'une part, un premier couple comprenant un premier terminal de communication audio (TM1) et un premier terminal de communication vidéo (PC1), et d'autre part, un second couple comprenant un second terminal de communication audio (TM2) et un second terminal de communication vidéo (PC2), lesdits terminaux (TMi, PCi) étant tous de type LAN ; au moins le premier couple (TM1, PC1) comportant des terminaux indépendants et asynchrones ; **caractérisé en ce qu'**il comprend, associé à ce premier couple, des moyens de liaison (ML1) pour établir :

   - une liaison vidéo (L2) entre ces moyens de liaison (ML1) et le terminal vidéo (PC1) du premier couple,
   - une liaison audio (L1) entre ces moyens de liaison (ML1) et le terminal audio (TM1) du premier couple,
   - une liaison vidéo (L3-2) entre ces moyens de liaison (ML1) et le second couple (TM2, PC2),
   - une liaison audio (L3-1) entre ces moyens de liaison (ML1) et le second couple (TM2, PC2).

2.   Dispositif selon la revendication 1, **caractérisé en ce que** lesdits moyens de liaison (ML1) comportent :

   • des premiers moyens de datation (MD1) agencés, d'une part, pour adjoindre un marquage temporel d'émission et un identifiant à des données audio, respectivement vidéo, provenant dudit premier terminal de communication audio (TM1), respectivement vidéo (PC1), avant leur transmission à destination du second couple via ledit réseau local, et d'autre part, pour adjoindre un marquage temporel de réception à des données audio et vidéo provenant dudit second couple et contenant un identifiant et un marquage temporel d'émission, et
   • des moyens de traitement (MT1) propres à déterminer un écart temporel (ET) représentatif de la différence de durée de transmission entre des données audio et des données vidéo reçues et présentant un même identifiant, à partir de leurs marquages temporels d'émission et de réception respectifs, et à retarder d'une valeur représentative dudit écart temporel (ET) la transmission desdites données audio reçues audit premier terminal de communication audio (TM1) par rapport à la transmission desdites données vidéo reçues audit premier terminal de communication vidéo (PC1 ).

3.   Dispositif selon la revendication 2, **caractérisé en ce que** lesdits moyens de traitement (MT1) sont agencés pour déterminer un écart temporel (ET) représentatif de ladite différence de durée de transmission et d'une différence de temps de codage et de décodage entre des données audio et des données vidéo reçues et présentant un même identifiant.

4.   Dispositif selon la revendication 2, **caractérisé en ce que** lesdits moyens de traitement (MT1) sont agencés pour déterminer ledit écart temporel (ET) à partir de marquages temporels d'émission et de réception desdites données audio et vidéo reçues, et à partir de valeurs représentatives de leurs durées de transmission respectives entre les seconds terminaux de communication audio (TM2) et vidéo (PC2) du second couple qui les a émises, et d' autres moyens de liaison (ML2) associés au second couple.

5.  Dispositif selon la revendication 4, **caractérisé en ce que** lesdites liaison entre les seconds terminaux de communication audio (TM2) et vidéo (PC2) et les autres moyens de liaison (ML2) associés au second couple sont de type « déterministe ».

6.  Dispositif selon la revendication 2, **caractérisé en ce que** lesdits moyens de traitement (MT1) sont agencés pour déterminer ledit écart temporel (ET) à partir des marquages temporels d'émission et de réception desdites données audio et vidéo reçues, et à partir de valeurs représentatives de leurs durées de transmission respectives entre lesdits moyens de liaison (ML1 ) et les premiers terminaux de communication audio (TM1) et vidéo (PC1) auxquels elles sont destinées.

7.  Dispositif selon la revendication 6, **caractérisé en ce que** lesdites liaisons entre lesdits moyens de liaison (ML1 ) et les premiers terminaux de communication audio (TM1) et vidéo (PC1) sont de type « déterministe ».

8.  Dispositif selon la revendication 2, **caractérisé en ce que** lesdits moyens de datation (MD1) sont également agencés pour adjoindre auxdites données audio et auxdites données vidéo, à transmettre aux autres moyens de liaison (ML2), des données représentatives d'un niveau de priorité.

9.  Dispositif selon la revendication 9, **caractérisé en ce que** ledit niveau de priorité associé auxdites données vidéo est inférieur audit niveau de priorité associé auxdites données audio.

10. Dispositif selon la revendication 1, **caractérisé en ce que** lesdits moyens de liaison (ML1 ) assurent une fonction de type « proxy » pour lesdites données audio et pour lesdites données vidéo.

11. Terminal de communication audio de type LAN (TMi), **caractérisé en ce qu'**il comprend un dispositif de traitement (Di) selon l'une des revendications précédentes.

12. Terminal de communication vidéo de type LAN (PCi), **caractérisé en ce qu'**il comprend un dispositif de traitement (Di) selon l'une des revendications précédentes.

13. Boîtier de communication (Bi), **caractérisé en ce qu'**il comprend un dispositif de traitement (Di) selon l'une des revendications précédentes.

Fig.1

Fig.2

Fig.3

**Office européen
des brevets**

# RAPPORT DE RECHERCHE EUROPEENNE

Numéro de la demande

EP 04 29 0215

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | US 5 594 660 A (CHAN TZOYAO ET AL) 14 janvier 1997 (1997-01-14) * abrégé * * colonne 1, ligne 18 - ligne 44 * * colonne 3, ligne 45 - colonne 4, ligne 37 * | 1-16 | H04L29/06 H04N1/36 |
| X | US 5 598 352 A (DAUM DANIEL T ET AL) 28 janvier 1997 (1997-01-28) * abrégé * * colonne 1, ligne 24 - ligne 50 * * revendication 1 * | 1-16 | |
| Y | US 6 173 317 B1 (CHADDHA NAVIN ET AL) 9 janvier 2001 (2001-01-09) * abrégé * * colonne 6, ligne 52 - colonne 7, ligne 14; revendication 1 * | 1-16 | |
| Y | US 6 512 778 B1 (GEAGAN JAY ET AL) 28 janvier 2003 (2003-01-28) * abrégé * * colonne 6, ligne 37 - ligne 48; revendications 1-4; figure 3 * | 1-16 | DOMAINES TECHNIQUES RECHERCHES (Int.Cl.7) H04L H04N |

Le présent rapport a été établi pour toutes les revendications

| Lieu de la recherche | Date d'achèvement de la recherche | Examinateur |
|---|---|---|
| MUNICH | 6 avril 2004 | Hilbig, S |

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 04 29 0215

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

06-04-2004

| Document brevet cité au rapport de recherche | | Date de publication | Membre(s) de la famille de brevet(s) | | Date de publication |
|---|---|---|---|---|---|
| US 5594660 | A | 14-01-1997 | AT | 205657 T | 15-09-2001 |
| | | | DE | 69522697 D1 | 18-10-2001 |
| | | | DE | 69522697 T2 | 11-07-2002 |
| | | | EP | 0783824 A1 | 16-07-1997 |
| | | | JP | 10507597 T | 21-07-1998 |
| | | | WO | 9610889 A1 | 11-04-1996 |
| | | | US | 5815634 A | 29-09-1998 |
| | | | US | 5598352 A | 28-01-1997 |
| | | | US | 5838380 A | 17-11-1998 |
| | | | US | 5923665 A | 13-07-1999 |
| US 5598352 | A | 28-01-1997 | US | 5594660 A | 14-01-1997 |
| | | | EP | 0797893 A1 | 01-10-1997 |
| | | | JP | 10511513 T | 04-11-1998 |
| | | | WO | 9619078 A1 | 20-06-1996 |
| | | | AT | 205657 T | 15-09-2001 |
| | | | DE | 69522697 D1 | 18-10-2001 |
| | | | DE | 69522697 T2 | 11-07-2002 |
| | | | EP | 0783824 A1 | 16-07-1997 |
| | | | JP | 10507597 T | 21-07-1998 |
| | | | WO | 9610889 A1 | 11-04-1996 |
| | | | US | 5815634 A | 29-09-1998 |
| | | | US | 5838380 A | 17-11-1998 |
| | | | US | 5923665 A | 13-07-1999 |
| US 6173317 | B1 | 09-01-2001 | AUCUN | | |
| US 6512778 | B1 | 28-01-2003 | US | 6134243 A | 17-10-2000 |
| | | | US | 2003204555 A1 | 30-10-2003 |
| | | | AU | 758220 B2 | 20-03-2003 |
| | | | AU | 2322499 A | 02-08-1999 |
| | | | CA | 2318963 A1 | 22-07-1999 |
| | | | CA | 2325828 A1 | 22-07-1999 |
| | | | CN | 1308437 A | 15-08-2001 |
| | | | CN | 1290444 T | 04-04-2001 |
| | | | EP | 1051008 A2 | 08-11-2000 |
| | | | EP | 1062782 A2 | 27-12-2000 |
| | | | JP | 2002510165 T | 02-04-2002 |
| | | | WO | 9937057 A2 | 22-07-1999 |
| | | | AU | 755830 B2 | 19-12-2002 |
| | | | AU | 2232799 A | 02-08-1999 |
| | | | AU | 2232899 A | 02-08-1999 |
| | | | CA | 2316852 A1 | 22-07-1999 |
| | | | CN | 1290445 T | 04-04-2001 |
| | | | EP | 1048156 A2 | 02-11-2000 |
| | | | JP | 2003526227 T | 02-09-2003 |

EPO FORM P0460

Pour tout renseignement concernant cette annexe : voir Journal Officiel de l'Office européen des brevets, No.12/82

## ANNEXE AU RAPPORT DE RECHERCHE EUROPEENNE
## RELATIF A LA DEMANDE DE BREVET EUROPEEN NO.

EP 04 29 0215

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

06-04-2004

| Document brevet cité au rapport de recherche | Date de publication | Membre(s) de la famille de brevet(s) | Date de publication |
|---|---|---|---|
| US 6512778 B1 | | WO 9937056 A2 | 22-07-1999 |
| | | WO 9937072 A2 | 22-07-1999 |
| | | US 6453355 B1 | 17-09-2002 |
| | | US 2003131117 A1 | 10-07-2003 |

EPO FORM P0460

Pour tout renseignement concernant cette annexe : voir Journal Officiel de l'Office européen des brevets, No.12/82